# EUROPÄISCHE PATENTSCHRIFT

(11) **EP 4 146 460 B1**
(45) Veröffentlichungstag und Bekanntmachung des Hinweises auf die Patenterteilung: **04.10.2023**
(21) Anmeldenummer: 21725689.0
(22) Anmeldetag: 05.05.2021
(51) Int. Cl.: B29C 70/86

(54) **VERWENDUNG EINES FASERVERBUNDWERKSTOFF-VERBINDUNGSABSCHNITTS ZUR VERBINDUNG EINER ROHRFÖRMIGEN FASERVERBUNDWERKSTOFFSTRUKTUR MIT EINER ANSCHLUSSEINRICHTUNG**
USE OF A FIBRE COMPOSITE MATERIAL CONNECTING SECTION FOR CONNECTING A TUBULAR FIBRE COMPOSITE MATERIAL STRUCTURE TO A CONNECTOR DEVICE
UTILISATION D'UNE SECTION DE LIAISON DE MATÉRIAU COMPOSITE À BASE DE FIBRES POUR RELIER UNE STRUCTURE DE MATÉRIAU COMPOSITE À BASE DE FIBRES TUBULAIRES À UN DISPOSITIF CONNECTEUR

(30) Priorität: 06.05.2020 DE 102020112179
(43) Veröffentlichungstag der Anmeldung: 15.03.2023
(73) Patentinhaber: Leibniz-Institut für Verbundwerkstoffe GmbH, 67663 Kaiserslautern (DE); Hochschule Kaiserslautern University of Applied Sciences, 67659 Kaiserslautern (DE)
(72) Erfinder: SCHMITT, Uwe, 67663 Kaiserslautern (DE); PFAFF, Thomas, 66892 Bruchmühlbach-Miesau (DE); MAGIN, Michael, 66822 Lebach (DE)
(74) Vertreter: Patentanwaltskanzlei Vièl & Wieske PartGmbB
(86) Internationale Anmeldenummer: PCT/DE2021/100406
(87) Internationale Veröffentlichungsnummer: WO 2021/223810

(56) Entgegenhaltungen:
- EP-A2- 0 082 021
- WO-A1-2005/036042

## Beschreibung

Die vorliegende Erfindung betrifft die Verwendung eines Faserverbundwerkstoff-Verbindungsabschnitts zur Verbindung einer rohrförmigen Faserverbundwerkstoffstruktur mit einer Anschlusseinrichtung, wobei die Faserverbundwerkstoffstruktur mehr Umfangslagen als Längsfäden aufweist, wobei der Verbindungsabschnitt in seinem Inneren wenigstens ein Faserumlenkelement aufweist, wobei der Verlauf der Längsfäden aus dem Faserverbundwerkstoffbauteil der Form eines Faserumlenkabschnitts eines Faserumlenkelements folgt, sodass deren Faserrichtung an dem Faserumlenkabschnitt umgelenkt ist, und wobei die Langfasern die Faserumlenkelemente, denen sie jeweils zugeordnet sind, nicht vollständig umschlingen, wobei die Faserumlenkelemente aus Faserverbundwerkstoff bestehen, für einen Drucktank.

Zur Verbindung von Faserverbundwerkstoffen mit Bauteilen sind die für metallische Werkstoffe bekannten Verbindungsverfahren oft nicht oder nur unter Verlust von Festigkeit der Verbindung anwendbar. Insbesondere wird die Festigkeit der Verbindung zwischen dem Faserverbundwerkstoff und dem Bauteil durch Trennung und Unterbrechung von Fasern des Faserverbundwerkstoffes reduziert. Zu solchen Unterbrechungen der Fasern kommt es beispielsweise beim Durchbohren oder Beschneiden des Faserverbundwerkstoffes, um das zu verbindende Bauteil durch die Bohrung zu stecken oder an die beschnittenen Kanten anzukleben.

Daher sind Faserverbundwerkstoff-Verbindungsabschnitte, die eine Faserverbundwerkstoffstruktur mit einer Anschlusseinrichtung ohne eine Durchtrennung der Langfasern der Faserverbundstruktur verbinden, bekannt.

Die WO 2016/008858 A1 beschreibt einen Faserverbundwerkstoff-Verbindungsabschnitt zur Verbindung einer Faserverbundwerkstoffstruktur mit einer Anschlusseinrichtung. Der Verbindungsabschnitt weist dabei in seinem Inneren wenigstens ein Faserumlenkelement auf, wobei der Verlauf erster Langfasern aus dem Faserverbundwerkstoffbauteil der Form eines ersten Faserumlenkelements folgt, sodass deren Faserrichtung an dem ersten Faserumlenkabschnitt umgelenkt ist. Der Verlauf zweiter Langfasern aus der Faserverbundwerkstoffstruktur folgt einem zweiten Abschnitt desselben oder eines zweiten Faserumlenkelements, sodass deren Faserrichtung an dem zweiten Faserumlenkabschnitt umgelenkt ist. Die beiden Faserumlenkabschnitte sind räumlich voneinander getrennt, wobei an dem Verbindungsabschnitt ein erster Befestigungsvorsprung und ein zweiter, räumlich von dem ersten getrennter Befestigungsvorsprung jeweils zur Kraftübertragung in den Verbindungsabschnitt ausgebildet sind, und wobei der erste Befestigungsvorsprung durch das erste Faserumlenkelement und die ersten Langfasern und der zweite Befestigungsvorsprung durch das zweite Faserumlenkelement und die zweiten Langfasern ausgebildet ist. Die Langfasern, die aus der Faserverbundwerkstoffstruktur oder dem Faserverbundwerkstoffbauteil zu dem Befestigungsabschnitt verlaufen, werden aufgeteilt und auf mehrere Befestigungsvorsprünge verteilt. So können die auf die Langfasern übertragenen Zug- und Druckkräfte in ein anderes Bauteil übertragen werden. Dabei kann das Faserverbundwerkstoffteil als Stab oder Rohr als Zug-Druck-Element ausgebildet sein. Insbesondere kann ein großer Anteil von Fasern mit Faserrichtung in Längsrichtung des Stabes oder Rohres vorgesehen sein.

Die dem Oberbegriff von Anspruch 1 entspechende EP 0 082 021 A2 beschreibt die Befestigung eines Ringes, insbesondere eines Metallringes, an einem Gegenstand, der Wände oder Schürzen aus faserverstärktem Kunstharzmaterial aufweist. Der Ring weist eine Vielzahl von Außenrillen auf. Die Schürze umfasst für jede Rille nacheinander eine erste und eine zweite Schicht aus faserverstärktem Harzmaterial. Die Fasern in der ersten Schicht sind im Wesentlichen parallel zur Achse des Rings ausgerichtet und erstrecken sich von der Schürze in die jeweiligen Rillen. Über der ersten Schicht liegt eine zweite Schicht, die aus Ringwicklungen besteht, die von der Schürze in Richtung der Rille verlaufen. Die zweite Lage liegt zumindest teilweise in der Rille, um die erste Lage in der Rille zu fixieren. Diese Schichtung wird für jede Rille wiederholt, und schließlich werden aufeinanderfolgende Reifenwicklungen über das gesamte Erzeugnis gewickelt.

Der Erfindung liegt die Aufgabe zugrunde, hochgradig druckbeständige Drucktanks zu schaffen.

Die Aufgabe wird durch die Verwendung eines Faserverbundwerkstoff-Verbindungsabschnitts zur Verbindung einer rohrförmigen Faserverbundwerkstoffstruktur mit einer Anschlusseinrichtung, wobei die Faserverbundwerkstoffstruktur mehr Umfangslagen als Längsfäden aufweist, wobei der Verbindungsabschnitt in seinem Inneren wenigstens ein Faserumlenkelement aufweist, wobei der Verlauf der Langfasern aus dem Faserverbundwerkstoffbauteil der Form eines Faserumlenkabschnitts eines Faserumlenkelements folgt, sodass deren Faserrichtung an dem Faserumlenkabschnitt umgelenkt ist, und wobei die Langfasern die Faserumlenkelemente, denen sie jeweils zugeordnet sind, nicht vollständig umschlingen, wobei die Faserumlenkelemente aus Faserverbundwerkstoff bestehen und wobei zwischen der rohrförmigen Faserverbundwerkstoffstruktur und der Anschlusseinrichtung keine feste Verbindung vorhanden ist, für einen Drucktank gelöst.

Der Drucktank kann als Innen- und Außendrucktank ausgestaltet sein. Dabei besteht der Drucktank aus der rohrförmigen Faserverbundwerkstoffstruktur, die über den Faserverbundwerkstoff-Verbindungsabschnitt mit einer Anschlusseinrichtung verbunden ist. Zur Verbindung der Faserverbundwerkstoffstruktur mit der Anschlusseinrichtung können die Langfasern aus der Faserverbundwerkstoffstruktur entlang eines Oberflächenabschnitts der Faserumlenkelemente verlaufen. Es muss dabei keine Umwicklung der Faserumlenkelemente durch die Langfasern erfolgen. Der Oberflächenabschnitt bildet zumindest teilweise eine Außenoberfläche des Verbindungsabschnitts. Die Oberflächenabschnitte verlaufen unter einem Winkel zwischen 20° und 60°, besonders bevorzugt 45°, aus der Richtung heraus, die die Langfasern haben, die zu dem Verbindungsabschnitt hin verlaufen. Die Langfasern verlaufen außerdem mit einem Abschnitt an den benachbarten Faserumlenkelementen, wobei die Abschnitte an den benachbarten Faserumlenkelementen ihre Richtung ändern. Nach der Richtungsänderung verlaufen sie entlang der Oberflächen der Faserumlenkelemente. Aufgrund der geänderten Faserrichtung können die Außenflächen der Faserumlenkelemente als Faserumlenkabschnitte für die Fasern verstanden werden. In Bezug auf die Langfasern erfüllen aufgrund der gekrümmten Oberfläche, entlang der die Fasern verlaufen, auch die jeweils benachbarten Faserumlenkelemente die Funktion eines Faserum lenkabschnitts.

Die Faserumlenkelemente können in Richtung der Anschlusseinrichtung jeweils eine vorstehende Spitze aufweisen. Die Langfasern reichen dabei maximal bis zu dieser Spitze, so dass keine vollständige Umwicklung des Faserumlenkelements durch die Langfaser erfolgt. Die Langfasern wechseln nach ihrer Umlenkung auf das Faserumlenkelement nicht noch einmal signifikant die Richtung. Die Oberflächen der Faserumlenkelemente entlang denen die Langfasern jeweils verlaufen, sind zumindest in einem bis in die Nähe der Spitzen und nach einer Umlenkung von vorzugsweise 90° in jeweils eine weitere Oberfläche über, die von den Spitzen aus jeweils in Richtung des Inneren des Verbindungsabschnitts verlaufen. Am Ende dieser Oberfläche befindet sich jeweils eine Kerbe, nach der sich die Außenoberfläche des Verbindungsabschnitts im nächsten Faserumlenkelement fortsetzt, soweit es sich nicht um das letzte Faserumlenkelement handelt. Die beiden Oberflächen, die sich an der Spitze berühren, bilden vorzugsweise die Schenkel eines gleichseitigen Dreiecks. Sie bilden eine V-förmige Vertiefung der Anschlusseinrichtung. Die Langfasern gehören jeweils vorzugsweise zu einer eigenen Faserlage. Die Langfasern können dabei in die Außenflächen der Faserumlenkelemente eingebettet sein.

Vorteilhaft wird durch die Verwendung von rohrförmigen Faserverbundwerkstoffstrukturen eine Gewichts- und Kostenreduktion im Vergleich zu konventionellen metallischen, aber auch konventionell gewickelten Faserverbundwerkstoff- Drucktanks (Typ 4) erreicht. Diese Gewichts- und Kostenreduktion ist insbesondere im Bereich der H₂-Hochdrucktanks im Bereich der mobilen Anwendungen wie Kraftfahrzeugen, Schiffen, Flugzeugen und der Raumfahrt vorteilhaft.

Die Faserumlenkelemente können als voneinander unabhängige Faserumlenkelemente ausgeführt sein. Alternativ können die Faserumlenkelemente als ein helixförmiges, zusammengehöriges Faserumlenkelement ausgeführt sein.

Vorteilhaft können bei der vorliegenden Erfindung kleinere Durchmesser der rohrförmigen Faserverbundwerkstoffstruktur für den Drucktank erzielt werden. Auf diese Weise können die Drucktanks Durchmesser < 100 mm aufweisen. Beispielsweise ist für konventionell durch das Wickelverfahren hergestellte H₂-Hochdrucktanks der minimale Durchmesser durch das Bossteil bestimmt. Beträgt dieser 100 mm, so kann der Außendurchmesser des Drucktanks nicht weniger als ca. 130 mm betragen, da im Wickelverfahren hergestellte Drucktanks zur Aufnahme der infolge des Überdrucks verursachten Längskräfte ein mit Fasern überwickeltes Bossteil benötigen. So muss das Bossteil neben dem für die Aufnahme des Sicherheitsventils vorgesehenen zylindrischen Abschnitts mit Innengewinde einen ausgeprägten tellerförmigen Abschnitt größeren Durchmessers aufweisen, der letztendlich als Wendezone beim Bewickeln dient und dabei zusätzlich die durch den Innendruck bedingten Längskräfte absorbiert. Diese Funktion der Aufnahme der Längskräfte beim Übergang der Last vom zylinderförmigen Verbundwerkstoffbereich in den oft metallischen Dombereich wird durch die vorliegende Erfindung weitaus kompakter und mit geringeren Spannungskonzentrationen gelöst.

Vorteilhaft können die rohrförmigen Faserverbundwerkstoffstrukturen mit der Anschlusseinrichtung gegenüber konventionell gewickelten Innendrucktanks sowohl durch Innen- als auch durch Außendruck belastet werden. Damit eignen sich diese rohrförmigen Faserverbundwerkstoffstrukturen mit Anschlusseinrichtung auch zur Verwendung als ineinander geschachtelte Hochdrucktanks, wobei der innere Tank gegenüber dem äußeren Tank auch einen geringeren Innendruck aufweisen kann und somit faktisch einen mit Außendruck belasteten Tank darstellt. In der Regel weisen diese Hochdrucktanks einen Mindestberstdruck von ca. 1575 bar auf.

Vorteilhaft können die Faserverbundwerkstoffstruktur und die Anschlusseinrichtung ohne Klebung verbunden werden. Die Kraftübertragung von Zug- und Druckkräften erfolgt durch Formschluss der Anschlusseinrichtung mit den Umlenkelementen und den Langfasern der Faserverbundwerkstoffstruktur. Somit kommt es bei Temperaturänderungen nicht zu Verspannungen. Vorteilhaft werden zur Befestigung der Anschlusseinrichtung keine Fasern unterbrochen. Eine solche Unterbrechung von Fasern kann sich negativ auf die Festigkeit der Faserverbundwerkstoffstruktur auswirken. Auch Spannungskorrosion tritt infolge fehlender Durchbrüche von Verbindungselementen wie Bolzen oder Schrauben nicht auf. Der Einsatz unterschiedlicher Werkstoffe mit unterschiedlichen Temperaturausdehnungskoeffizienten führt selbst in Folge großer Temperaturdifferenzen nicht zu Verspannungen in der Krafteinleitung zwischen der rohrförmigen Faserverbundwerkstoffstruktur und der Anschlusseinrichtung, da keine feste Verbindung, wie beispielsweise bei einer Klebung, vorhanden ist. Aus diesem Grund ist der Drucktank auch für cryogene Anwendungen, beispielsweise der cryogenen Hochdruckspeicherung, geeignet. Beispielsweise kann der Drucktank als doppelwandiger Tank mit cryogenem Innentank, beispielsweise für flüssiges H₂, und gasförmiges H₂ im Außentank ausgestaltet sein. Cryogene Tanks sind in der Regel durch sehr aufwendige Vakuumdämmschichten gegen Erwärmung des cryogenen Inhalts geschützt. Wird der cryogene Inhalt, beispielsweise H₂, wärmer als 20K, so muss ein Teil des Inhalts abgeblasen werden, um den Restinhalt wieder herunterzukühlen. Dieses Abblasen könnte dann bei einem doppelwandigen Außendruck-/Innendrucktank vom inneren in den äußeren Tank passieren und dort als gasförmiges H₂ weiter zur Verfügung stehen.

Durch die größere Anzahl der Umfangslagen der rohrförmigen Faserverbundwerkstoffstruktur können diese mit einem höheren Innen- wie auch Außendruck belastet werden. Vorteilhaft werden die durch den Innen- oder Außendruck auftretenden Kräfte im zylindrischen Teil des Tanks insbesondere durch die Umfangslagen aufgenommen. Dadurch können Hochdrucktanks mit einem Berstdruck von beispielsweise 1575 bar mit der rohrförmigen Faserverbundwerkstoffstruktur hergestellt werden. Dabei weist das Gesamtlaminat der rohrförmigen Faserverbundwerkstoffstruktur besonders bevorzugt doppelt so viele Umfangslagen wie Längsfäden auf.

Dabei ist es zweckmäßig, dass der Faserverbundwerkstoff der Faserumlenkelemente hauptsächlich aus Umfangslagen besteht.

Vorzugsweise werden die V-förmigen Vertiefungen der Anschlusseinrichtung mit Umfangslagen aus Faserverbundwerkstoff aufgefüllt. Bevorzugt werden die Umfangslagen bei Verwendung als Drucktank über die komplette Anschlusseinrichtung gewickelt, und zwar bezüglich der Gesamtwanddicke vorzugsweise annähernd im Verhältnis 2/3 (Umfangslage) zu 1/3 (Längslage). Durch die Wicklung der Umfangslagen werden die Langfasern der rohrförmigen Faserverbundwerkstoffstruktur mit der Anschlusseinrichtung fixiert.

Durch die Orientierung der Fasern der Faserumlenkelemente in Umfangsrichtung werden Zug-, Druck- und Torsionskräfte, die über die Langfasern der Faserverbundwerkstoffstruktur auf die Faserumlenkelemente übertragen werden, auf dem Verbindungsabschnitt in Umfangkräfte in den Fasern der Faserumlenkelemente umgewandelt. Dies ermöglicht ein vorteilhaftes Einleiten der Kräfte in die Faserumlenkelemente.

Eine weitere Ausführungsform der Erfindung besteht darin, dass die Anschlusseinrichtung eine Domkappe aufweist.

Die Domkappe bildet dabei den druckfesten Abschluss einer rohrförmigen Faserverbundwerkstoffstruktur. Eine solche rohrförmige Faserverbundwerkstoffstruktur mit Domkappe eignet sich vorteilhaft als Drucktank. Die durch den Innen- oder Außendruck auf die Faserverbundwerkstoffstruktur wirkenden Kräfte können über die Langfasern und die Faserumlenkelemente auf die Anschlusseinrichtung mit den Domkappen übertragen werden.

Eine weitere Ausführungsform der Erfindung besteht darin, dass die Faserverbundwerkstoffstruktur einen Liner aufweist.

Um die Dichtheit der Drucktanks aus rohrförmigen Faserverbundwerkstoffstrukturen gegen das Austreten oder das Eintreten von Medien, beispielsweise H₂ von außen, zu gewährleisten, können die rohrförmigen Faserverbundwerkstoffstrukturen und die Anschlusseinrichtung mit einem Liner versehen werden. Dieser Liner kann je nach Druckrichtung innen oder außen auf die rohrförmigen Faserverbundwerkstoffstrukturen aufgebracht werden. Der Liner kann ein thermoplastischer Liner, beispielsweise HDPE oder PA, sein. Er kann auch aus Glas, Silikon oder Metallen bestehen. Vorteilhaft wird durch den Liner die Mediendichtheit der Faserverbundwerkstoffstruktur selbst dann gewährleistet, wenn Zwischenfaserbrüche in der Faserverbundwerkstoffstruktur auftreten.

Ein innenliegender Liner kann in Verbindung mit den Domkappen den Rohling für die Fertigung eines Innendrucktanks bilden. Auf diese Weise wird ein zusätzlicher Kern bei der Fertigung vermieden. Der Liner, der später mediendicht mit den Domkappen verbunden ist, kann im Verlauf der Fertigung auf Überdruck gesetzt werden, um so als Kern für die Wicklung der rohrförmigen Faserverbundwerkstoffstruktur zu dienen. Die Höhe des Drucks kann dabei den jeweiligen Erfordernissen angepasst werden. Eine zusätzliche Stabilisierung des Rohlings (Liner und Domkappen) während der Fertigung kann dadurch erreicht werden, dass der Liner mit einem stabilisierenden Medium (Styropor, Sand, Hohlkugeln etc.) geflutet wird, bis die textile Struktur des Tanks stabil ist.

Eine weitere Ausführungsform der Erfindung besteht darin, dass mehrere rohrförmige Faserverbundwerkstoffstrukturen über die Anschlusseinrichtungen miteinander verbunden sind.

Dabei entsteht ein Aufbau mit mehreren Drucktanks. Die Anschlusseinrichtungen können dabei als Verbindungsstücke zwischen den Drucktanks ausgebildet sein. Dabei kann der Aufbau aus modularen Tankeinheiten zum besseren Ausnutzen von Bauraum, beispielsweise bei H₂-Drucktanks im Fahrzeugbau, verwendet werden. Dabei können die modularen Drucktanks in verschiedenen Anordnungen orientiert werden. Beispielsweise können mehrere Drucktanks parallel nebeneinander angeordnet werden. Alternativ können beispielsweise mehrere Drucktanks mit flüssigem H₂ in einem Drucktank mit gasförmigen H₂ angeordnet werden.

Gemäß einer weiteren Ausbildung der Erfindung ist vorgesehen, dass der Liner je nach Druckrichtung innen oder außen auf die rohrförmigen Faserverbundwerkstoffstruktur aufgebracht ist.

Eine Ausbildung der Erfindung besteht darin, dass der Liner als Kern für die Wicklung der rohrförmigen Faserverbundwerkstoffstruktur dient.

Schließlich ist es zur Erfindung gehörig, dass mehrere rohrförmige Faserverbundwerkstoffstrukturen zu Untergruppen zusammengefasst miteinander verbunden sind.

Nachfolgend werden Ausführungsformen der Vorrichtung zur erfindungsgemäßen Verwendung anhand von Zeichnungen näher erläutert.

Es zeigen
- Fig. 1: einen Faserverbundwerkstoff-Verbindungsabschnitt zur erfindungsgemäßen Verwendung im Querschnitt,
- Fig. 2: einen weiteren Faserverbundwerkstoff-Verbindungsabschnitt zur erfindungsgemäßen Verwendung im Querschnitt,
- Fig. 3: ein weiterer Querschnitt des Faserverbundwerkstoff-Verbindungsabschnitt zur erfindungsgemäßen Verwendung gemäß Figur 2,
- Fig. 4: einen weiteren Faserverbundwerkstoff-Verbindungsabschnitt zur erfindungsgemäßen Verwendung im Querschnitt,

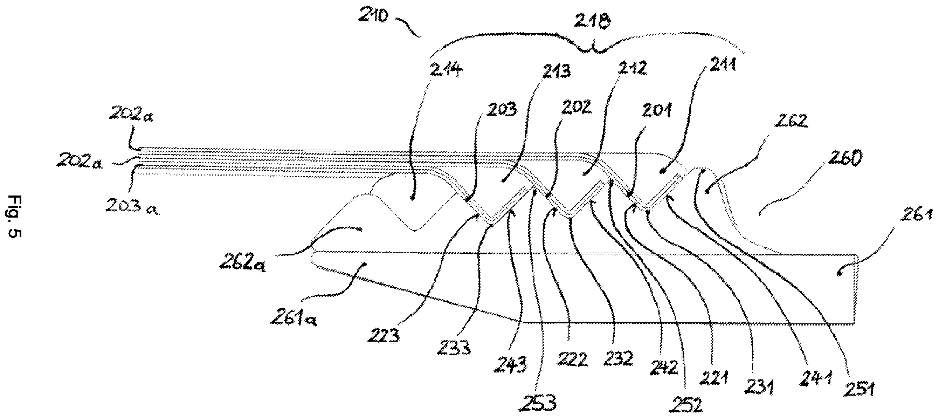

- Fig. 5: einen weiteren Faserverbundwerkstoff-Verbindungsabschnitt zur erfindungsgemäßen Verwendung im Querschnitt,
- Fig. 6: einen weiteren Faserverbundwerkstoff-Verbindungsabschnitt zur erfindungsgemäßen Verwendung im Querschnitt,
- Fig. 7: einen weiteren Faserverbundwerkstoff-Verbindungsabschnitt zur erfindungsgemäßen Verwendung im perspektivischen Querschnitt,
- Fig. 8: eine perspektivische Ansicht einer Anordnung von Drucktanks mit dem erfindungsgemäßen Faserverbundwerkstoff-Verbindungsabschnitt,
- Fig. 9: eine perspektivische Ansicht einer weiteren Anordnung von Drucktanks mit dem erfindungsgemäßen Faserverbundwerkstoff-Verbindungsabschnitt,
- Fig. 10: ein perspektivischer Querschnitt einer weiteren Anordnung von Drucktanks mit dem erfindungsgemäßen Faserverbundwerkstoff-Verbindungsabschnitt.

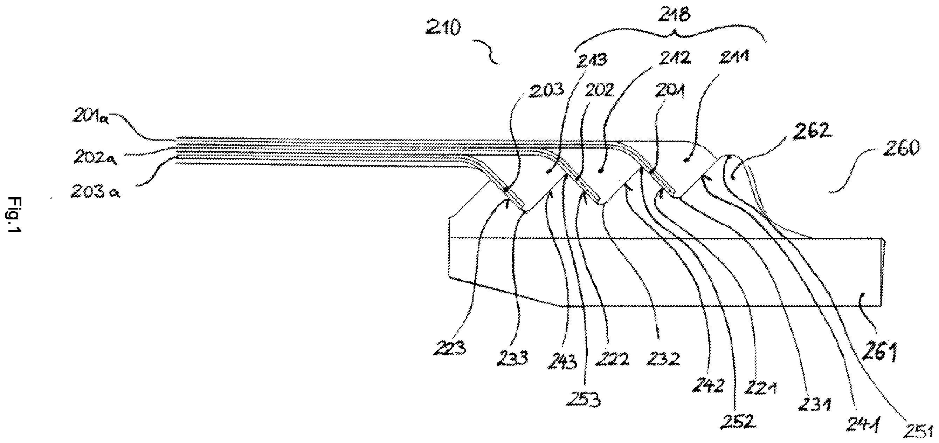

Fig. 1 zeigt einen Querschnitt durch einen Abschnitt einer Ausführungsform des Verbindungsabschnitts 210 in Eingriff mit einer dazu passenden Anschlusseinrichtung 260. Der Verbindungsabschnitt kann, insbesondere wenn er rohrförmig ausgeführt ist, in derselben Querschnittsebene noch einen weiteren Abschnitt aufweisen. Bevorzugt werden diese und die nachfolgend beschriebenen Ausführungsformen in einem rohrförmigen Verbindungsabschnitt 210 eingesetzt. In dieser Ausführungsform umschlingen die Langfasern 201a, 202a und 203a die Faserumlenkelemente 211, 212 und 213, denen sie jeweils zugeordnet sind, nicht vollständig. Vielmehr verlaufen die Langfasern 201a, 202a und 203a entlang eines Oberflächenabschnitts 221, 222, bzw. 223 der Faserumlenkelemente 211, 212 und 213, wobei der Oberflächenabschnitt 221, 222 bzw. 223 zumindest teilweise eine Außenoberfläche des Verbindungsabschnitts 210 bildet. Die Oberflächenabschnitte 221, 222 bzw. 223 verlaufen unter einem Winkel von näherungsweise 45°, in Abwandlungen zwischen 20° und 60°, aus der Richtung heraus, die die Abschnitte der Langfasern 201a, 202a und 203a haben, die zu dem Verbindungsabschnitt 210 hin verlaufen. Diese Abschnitte sind in der Figur 1 links von dem Verbindungsabschnitt 210 dargestellt. Die Langfasern 201a und 202a verlaufen außerdem mit einem Abschnitt an den benachbarten Faserumlenkelementen 212 bzw. 213, wobei die Abschnitte der Langfasern 201 und 202 an den Faserumlenkelementen 212 bzw. 213 ihre Richtung ändern. Nach der Richtungsänderung verlaufen sie entlang der Oberflächen 221 bzw. 222 der Faserumlenkelemente 211 bzw. 212. Aufgrund der geänderten Faserrichtung können die Außenoberflächen 221, 222 bzw. 223 der Faserumlenkelemente 211, 212 und 213 als Faserumlenkabschnitte für die Fasern verstanden werden. In Bezug auf die Langfasern 201a und 202a erfüllen aufgrund der gekrümmten Oberflächen, entlang der die Fasern 201a und 202a verlaufen, auch die jeweils benachbarten Faserumlenkelemente 212 und 213 die Funktion eines Faserumlenkabschnitts. Vorzugsweise umfasst der Verbindungsabschnitt 210 in dem gezeigten Querschnitt drei Faserumlenkelemente 211, 212 und 213, da diese für viele Fälle eine ausreichende Kraftübertragung bieten. Die Anzahl kann jedoch auch abweichen.

Die Langfasern 201a, 202a und 203a und entsprechend die Abschnitte der Langfasern 201, 202 und 203 bestehen zu 1/3 aus Längsfäden und zu 2/3 aus Umfangslagen.

Die Faserumlenkelemente 211, 212 und 213 weisen in Richtung der Anschlusseinrichtung 260 jeweils eine vorstehende Spitze 231, 232 bzw. 233 auf. In dieser Ausführungsform reichen die Langfasern 201a, 202a und 203a maximal bis an die Spitze 231, 232 bzw. 233. Die Langfasern 201a, 202a, 203a wechseln nach ihrer Umlenkung auf das Faserumlenkelement 211, 212 bzw. 213 nicht noch einmal signifikant die Richtung. Die Oberflächen 221, 222 bzw. 223 der Faserumlenkelemente 211, 212 bzw. 213, entlang denen die Langfasern 201a, 202a und 203a jeweils verlaufen, sind zumindest in einem bis in die Nähe der Spitzen 231, 232 bzw. 233 reichenden Abschnitt wenigstens näherungsweise eben ausgeführt. Diese ebenen Oberflächen 221, 222 bzw. 223 gehen jeweils auf der anderen Seite der Spitzen 231, 232 bzw. 233 und nach einer Umlenkung von vorzugsweise 90° in jeweils eine weitere Oberfläche 241, 242 bzw. 243 über, die von den Spitzen 231, 232 bzw. 233 aus jeweils in Richtung des Inneren des Verbindungsabschnitts 210 verlaufen. Am Ende dieser Oberflächen 241, 242 bzw. 243 befindet sich jeweils eine Kerbe 251, 252 bzw. 253, nach der sich die Außenoberfläche des Verbindungsabschnitts 210 im nächsten Faserumlenkelement fortsetzt, soweit es sich nicht um das letzte Faserumlenkelement 211 handelt. Die beiden Oberflächen, die sich an der Spitze 231, 232 bzw. 233 berühren, bilden wie in Figur 1 gezeigt, eine V-förmige Vertiefung. Vorzugsweise bilden die beiden Oberflächen die Schenkel eines gleichseitigen Dreiecks. Die Langfasern 201a, 202a und 203a sind vorzugsweise in die Außenoberfläche der Faserumlenkelemente 211, 212 bzw. 213 eingebettet. Die Faserumlenkelemente 211, 212 bzw. 213 sind jeweils aus Faserverbundwerkstoff hergestellt, wobei die Fasern in den Faserumlenkelementen 211, 212 bzw. 213 wenigstens näherungsweise rechtwinklig zur Betrachtungsebene verlaufen. In dem Fall, in dem der Verbindungsabschnitt rohrförmig ausgeführt ist, werden Zug- oder Druckkräfte auf den Verbindungsabschnitt in Umfangskräfte in den Fasern der Faserumlenkelementen 211, 212 bzw. 213 umgewandelt, welche als Längsspannungen aufgenommen werden. Auf diese Weise können die eingeleiteten Kräfte gut aufgefangen werden. Dies wird ermöglicht, indem in Bezug auf Zug in den Langfasern 201a, 202a bzw. 2013a die Oberflächen 221, 222 bzw. 223 mit den Langfasern 201a, 202a, 203a schräg zu der Krafteinleitungsrichtung in den Verbindungsabschnitt 210 angeordnet sind. Entsprechendes gilt auch für die Oberflächen 241, 242 bzw. 243 in Bezug auf die Spitze 231, 232 bzw. 233 gegenüberliegenden Oberflächen, welche bei Einleitung von Druck in den Verbindungsabschnitt 210 an die Anschlusseinrichtung 260 angepresst werden. Der Druck wird durch die schräge Anordnung der Oberflächen 241, 242 bzw. 243 ebenfalls in Umfangskräfte umgewandelt, welche von den Faserumlenkelementen 211, 212 bzw. 213 als Zugkräfte aufgenommen werden. Dieser Effekt wird besonders gut erreicht, wenn die Oberflächen 221, 222, 223, 241, 242 bzw. 243 schräg zur Krafteinleitungsrichtung so wie eben ausgeführt angeordnet sind. Die Faserumlenkelemente 211, 212 bzw. 213 haben vorzugsweise denselben Querschnitt. Die Faserumlenkelemente 211, 212 bzw. 213 können als voneinander unabhängige Faserumlenkelemente 211, 212 bzw. 213 ausgeführt sein. Alternativ können die Faserumlenkelemente 211, 212 bzw. 213 als ein schraubenförmiges, zusammenhängendes Faserumlenkelement 218 ausgeführt sein. Dann ist der Verbindungsabschnitt rohrförmig ausgeführt. In diesem Fall ergibt sich durch die Flächen 221, 222, 223, 241, 242 bzw. 243 und die Spitzen 231, 232 bzw. 233 eine gewindeartige Außen- oder Innenoberfläche des Verbindungsabschnitts 210. Die Faserumlenkelemente 211, 212 und 213 sind in dem in Figur 1 gezeigten Querschnitt entlang einer geraden Linie hintereinander angeordnet.

Die Anschlusseinrichtung 260 umfasst eine Trägerstruktur 261, an der ein Eingriffabschnitt 262 befestigt ist, der zu der Anschlusseinrichtung 260 gerichteten Außenoberfläche formkomplementär ist. Die zu den ebenen Oberflächen 221, 222, 223, 241, 242 bzw. 243 des Verbindungsabschnitts 210 gerichteten Abschnitte des Eingriffabschnitts 262 sind ebenfalls eben und mit derselben Schräge zu der Krafteinleitungsrichtung ausgeführt. Auf diese Weise kommt in dem Zustand, in dem der Verbindungsabschnitt 210 an der Anschlusseinrichtung 260 befestigt ist, ein Formschluss zustande. Die Anschlusseinrichtung 260 ist zu ihrem freien Ende hin verjüngt. Dabei ist die Seite der Trägerstruktur 261, die von dem Verbindungsabschnitt 210 abgewandt ist, abgeschrägt, sodass sich die Verjüngung ergibt.

Vorzugsweise sind der Verbindungsabschnitt 210 und die Anschlusseinrichtung 260 als separate Elemente ohne stoffschlüssige Verbindung ausgeführt. Im Falle einer Übertragung von Torsionskräften kann es jedoch sinnvoll sein, den Verbindungsabschnitt 210 mit der Anschlusseinrichtung 260 zu verkleben. Vorzugsweise ist dann wenigstens eine Faserlage zu dem Verbindungsabschnitt 210 als +45°-Lage ausgeführt. Wenn das Faserumlenkelement 218 schraubenförmig ausgebildet ist und eine gewindeartige Verbindung zwischen dem Verbbindungsabschnitt 210 und der Anschlusseinrichtung 260 vorliegt, kann in Festziehrichtung des Gewindes in einer Stellung an einem Gewindeanschlag Drehmoment übertragen werden, ohne dass ein Verkleben erforderlich ist.

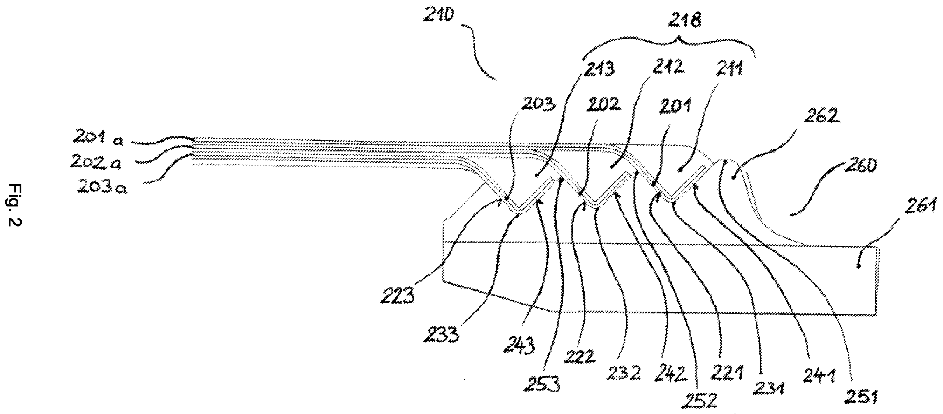

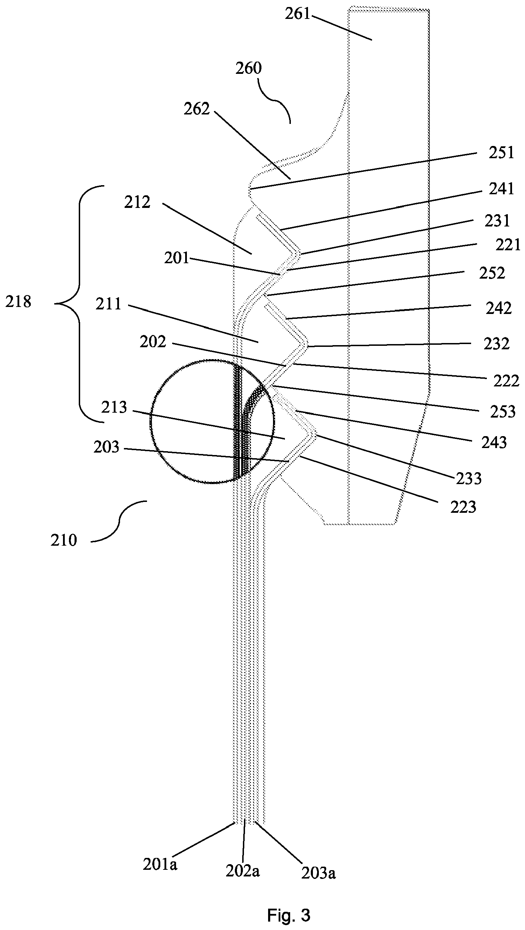

Die Figuren 2 und 3 zeigen eine zweite Ausführungsform in einer Querschnittsdarstellung. Die zweite Ausführungsform entspricht zum größten Teil der ersten Ausführungsform. Gleiche Merkmale sind mit gleichen Bezugsziffern bezeichnet. Im Folgenden wird nur auf die Unterschiede zwischen der ersten und der zweiten Ausführungsform eingegangen.

Die zweite Ausführungsform unterscheidet sich von der zweiten Ausführungsform dadurch, dass sich die Langfasern 201a, 202a und 203a über die Spitze 231, 232 bzw. 233 hinweg erstrecken und in der schrägen, ebenen Oberfläche 241, 242 bzw. 243 weiterverlaufen. Sie sind in diese Oberfläche 241, 242 bzw. 243 eingebettet. Sie enden am Ende der Oberfläche 241, 242 bzw. 243 in Richtung der Kerbe 251, 252 bzw. 253 oder der Nähe davon. Gegenüber der ersten Ausführungsform ergibt sich der zusätzliche Vorteil, dass die Langfasern 201a, 202a und 203a fester mit den Faserumlenkelementen 211, 212 bzw. 213 verbunden sind. Außerdem sind die Oberflächen 241, 242 bzw. 243 durch die zusätzlichen Fasern fester und können höhere Druckkräfte auf die Anschlusseinrichtung 260 übertragen.

Wie in dem Ausschnitt in Figur 3 zu sehen ist bestehen die Langfasern 201a, 202a und 203a und entsprechend die Abschnitte der Langfasern 201, 202 und 203 zu 1/3 aus Längsfäden und zu 2/3 aus Umfangslagen. Dabei gehen die Umfangslagen auch über die Spitze 231, 232 bzw. 233 hinaus. Bei einer rohrförmigen Ausgestaltung des Verbindungsabschnitts 210 gehen die Umfangslagen komplett um den zylindrischen Abschnitt der Anschlusseinrichtung 260 herum.

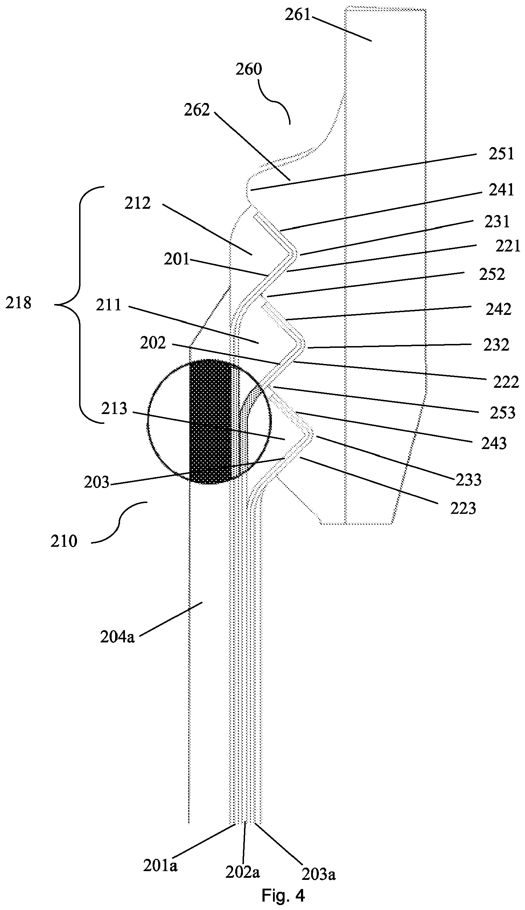

Fig. 4 zeigt eine dritte Ausführungsform des Verbindungsabschnitts 210 und der Anschlusseinrichtung 260 in einer Querschnittsdarstellung. Die dritte Ausführungsform entspricht zum größten Teil der zweiten Ausführungsform. Gleiche Merkmale sind mit gleichen Bezugsziffern bezeichnet. Im Folgenden wird nur auf die Unterschiede zwischen der zweiten und der dritten Ausführungsform eingegangen.

Die dritte Ausführungsform unterscheidet sich von der zweiten Ausführungsform dadurch, dass sie Langfasern 201a, 202a und 203a und entsprechend die Abschnitte der Langfasern 201, 202 und 203 komplett aus Längsfäden bestehen. Es ist eine zusätzliche Langfaser 204a, die sich komplett um die Langfasern 201a, 202a und 203a herumwickelt, an der Außenfläche des Verbindungsabschnitts 210 angeordnet. Diese Langfaser 204a besteht komplett aus Umfangslagen. Auf diese Weise sind die Umfangslagen von den Längslagen getrennt.

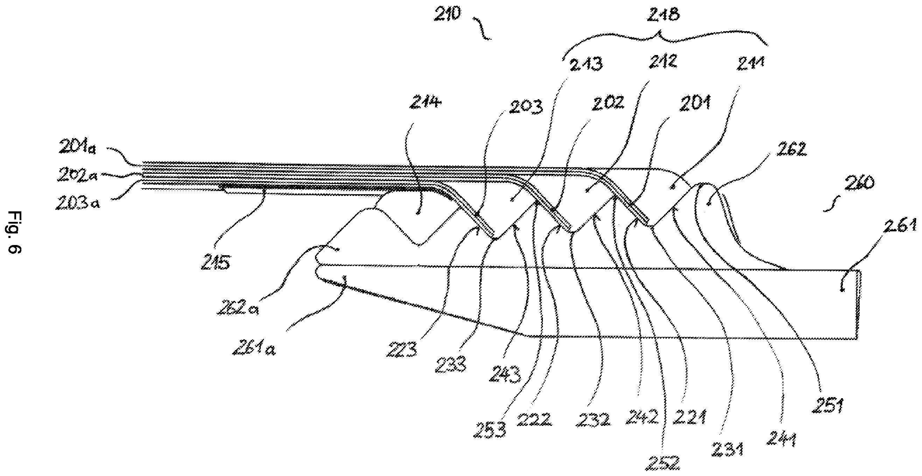

Fig. 6 zeigt eine vierte Ausführungsform des Verbindungsabschnitts 210 und der Anschlusseinrichtung 260 in einer Querschnittsdarstellung. Die vierte Ausführungsform entspricht zum größten Teil der zweiten Ausführungsform. Gleiche Merkmale sind mit gleichen Bezugsziffern bezeichnet. Im Folgenden wird nur auf die Unterschiede zwischen der zweiten und der dritten Ausführungsform eingegangen.

Die vierte Ausführungsform unterscheidet sich von der zweiten Ausführungsform durch ein zusätzliches weiteres Faserumlenkelement 214 an dem Verbindungsabschnitt 210. Es ist in Fortsetzung der Reihe der Faserumlenkelemente 211, 212 und 213 in Richtung von dem freien Ende des Verbindungsabschnitts 210 weg angeordnet. Es unterscheidet sich von den andern Faserumlenkelementen 211, 212 und 213 jedoch dadurch, dass in ihm keine Langfasern 201a, 202a und 203a eingebettet sind, mit denen der Verbindungsabschnitt 210 z. B. mit einem nicht explizit dargestellten Bauteil verbunden ist. Jedoch sind in dem Faserumlenkelement 214 in dem Fall, dass der Verbindungsabschnitt 210 rohrförmig ausgeführt ist, in Umfangsrichtung Fasern eingebettet, um zu ermöglichen, dass das Faserumlenkelement Kräfte aus der Umlenkung der Langfasern 203a besser aufnehmen kann. Die Kräfte aus den Langfasern werden durch die Ringform in Umfangskräfte umgewandelt. Die Festigkeit der Verbindung wird dadurch erhöht.

Ein weiterer Unterschied liegt darin, dass die Anschlusseinrichtung 260 in der vierten Ausführungsform in Richtung von deren freiem Ende verlängert ausgeführt ist. Der Trägerverlängerungsabschnitt 261a, um den die Trägerstruktur 261 verlängert ist, setzt die Verjüngung fort, die in den Figuren 1 und 2 am freien Ende der Trägerstruktur 261 gezeigt ist. Der Trägerverlängerungsabschnitt 261a liegt in Richtung des Verbindungsabschnitts 210 an einem ebenfalls zusätzlichen Widerlagerabschnitt 262a des Eingriffabschnitts 262 für das zusätzliche Faserumlenkelement 214 an. Der zusätzliche Widerlagerabschnitt 262a weist eine schräge, ebene Oberfläche auf, die im Befestigungszustand an einer ebenfalls schrägen Ebene des zusätzlichen Faserumlenkelements 214 anliegt. Dies ist analog zu den Oberflächen der Anschlusseinrichtung, die zu den kraftübertragenden Oberflächen 221, 241, 222, 242, 223, 243 des Verbindungsabschnitts 210 formkomplementär sind. Durch die Verlängerung der Anschlussreinrichtung 260, deren fortgesetzte Verjüngung und das zusätzliche Faserumlenkelement 214 ohne eingebettete Langfasern zur Krafteinleitung in den Verbindungsabschnitt wird ein stützender, aber dennoch in gewissem Maße nachgiebiger Übergang zwischen den krafteinleitenden Langfasern 201a, 202a und 203a und dem kraftübertragenden restlichen Verbindungsabschnitt 210 geschaffen. Dadurch vergleichmäßigt sich die Belastung der Langfasern 203a.

Fig. 6 zeigt eine fünfte Ausführungsform des Verbindungsabschnitts in einer Querschnittsdarstellung. Die fünfte Ausführungsform entspricht zum größten Teil der vierten Ausführungsform. Gleiche Merkmale sind mit gleichen Bezugsziffern bezeichnet. Im Folgenden wird nur auf die Unterschiede zwischen der fünften und der vierten Ausführungsform eingegangen.

Die fünfte Ausführungsform unterscheidet sich von der vierten Ausführungsform dadurch, dass der Verbindungsabschnitt 210 zusätzlich eine Stützlage 215 zwischen dem Faserumlenkelement 214 und der Faserlage 203a besitzt. Diese Stützlage 215 erstreckt sich von dem freien Ende des Verbindungsabschnitts 210 weg über das zusätzliche Faserumlenkelement 214 hinaus. Die Stützlage 215 vergleichmäßigt weiter die Spannung in dem Verbindungsabschnitt 210, sodass dieser bei unwesentlich höherem Materialaufwand für die Stützlage 215 belastbarer ist.

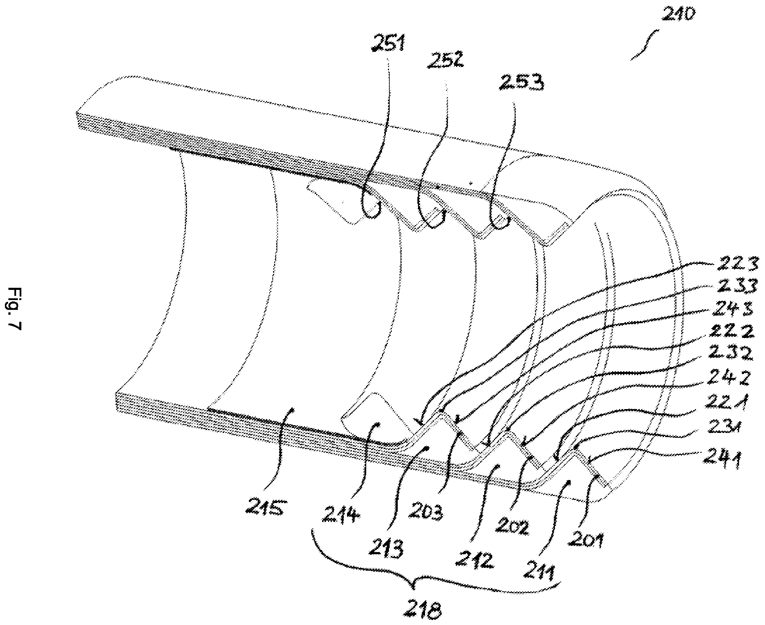

Außerdem unterscheidet sich die fünfte Ausführungsform von der vierten dadurch, dass die Langfasern 201a, 202a und 203a wie auch in der Figur 1 dargestellten ersten Ausführungsform nicht über die Spitzen 231, 232 bzw. 23 hinweg in die zweite schräge Oberfläche 241, 242, bzw. 243 weitergeführt sind. Alternativ zu der vierten Ausführungsform können die Langfasern 201a, 202a und 203a, wie in Figur 7 in einer sechsten Ausführungsform gezeigt, jedoch auch in die Oberflächen 241, 242 bzw. 243 weitergeführt sein, was Vorteile dieses Unterschieds liefert, die in Bezug auf Figur 2 oben angegeben sind.

Fig. 7 zeigt die sechste Ausführungsform des Verbindungsabschnitts 210 mit einer rohrförmigen Ausgestaltung in einer perspektivischen Schnittdarstellung. Die Bezugsziffern gleicher Merkmale stimmen mit denen der anderen Figuren überein.

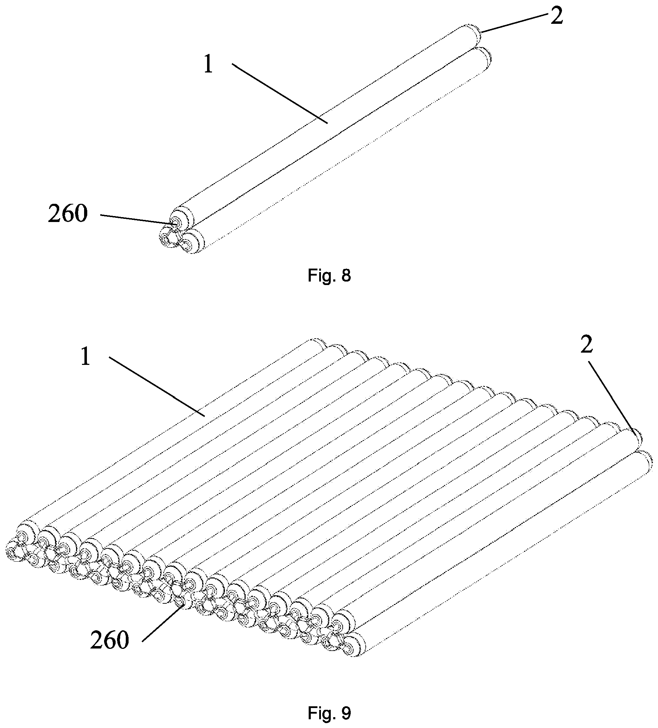

In Fig. 8 ist eine Anordnung von drei Drucktanks 1 dargestellt. Die Drucktanks 1 sind rohrförmige Faserverbundwerkstoffstrukturen, die an ihrem einen Ende über Anschlusseinrichtungen verbunden sind und an ihrem anderen Ende über eine Domkappe 2 verfügen.

In Fig. 9 ist eine Anordnung von dreiunddreißig Drucktanks 1 dargestellt. Die Drucktanks 1 sind rohrförmige Faserverbundwerkstoffstrukturen, die an ihrem einen Ende über Anschlusseinrichtungen verbunden sind und an ihrem anderen Ende über eine Domkappe 2 verfügen. Die Drucktanks 1 sind in Untergruppen von jeweils drei Drucktanks 1 zusammengefasst. Jede dieser Untergruppen ist jeweils mit den anderen Untergruppen verbunden.

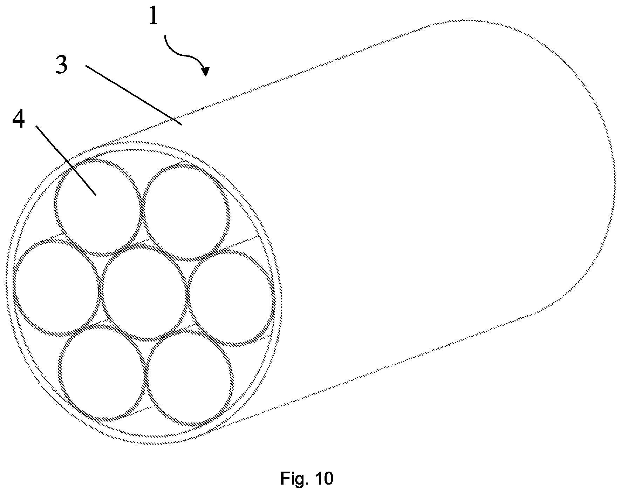

In Fig. 10 ist ein Drucktank 1 für cryogene Anwendungen dargestellt. Der Drucktank 1 ist als doppelwandiger Tank mit sieben cryogenen Innentanks 4, beispielsweise für flüssiges H₂, und gasförmiges H₂ im Außentank 3 ausgestaltet. Wird der cryogene Inhalt, beispielsweise H₂, wärmer als 20K, so muss ein Teil des Inhalts abgeblasen werden, um den Restinhalt wieder herunterzukühlen. Dieses Abblasen kann von den Innentanks 4 in den Außentank 3 erfolgen und dort als gasförmiges H₂ weiter zur Verfügung stehen.

## Patentansprüche

1. Verwendung eines Faserverbundwerkstoff-Verbindungsabschnitts (210) zur Verbindung einer rohrförmigen Faserverbundwerkstoffstruktur mit einer Anschlusseinrichtung (260), wobei die Faserverbundwerkstoffstruktur mehr Umfangslagen als Längsfäden aufweist, wobei der Verbindungsabschnitt (210) in seinem Inneren wenigstens ein Faserumlenkelement (211, 212, 213) aufweist, wobei der Verlauf der Langfasern (201a, 202a, 203a) aus dem Faserverbundwerkstoffbauteil der Form eines Faserumlenkabschnitts eines Faserumlenkelements (211, 212, 213) folgt, sodass deren Faserrichtung an dem Faserumlenkabschnitt umgelenkt ist, und wobei die Langfasern (201a, 202a, 203a) die Faserumlenkelemente (211, 212, 213), denen sie jeweils zugeordnet sind, nicht vollständig umschlingen, wobei die Faserumlenkelemente (211, 212, 213) aus Faserverbundwerkstoff bestehen und **gekennzeichnet dadurch, dass** keine feste Verbindung zwischen der rohrförmigen Faserverbundwerkstoffstruktur und der Anschlusseinrichtung (260) vorhanden ist, für einen Drucktank (1).

2. Verwendung gemäß Anspruch 1, **dadurch gekennzeichnet, dass** der Faserverbundwerkstoff der Faserumlenkelemente (211, 212, 213) hauptsächlich aus Umfangslagen besteht.

3. Verwendung gemäß Anspruch 1 oder 2, **dadurch gekennzeichnet, dass** die Anschlusseinrichtung (260) eine Domkappe (2) aufweist.

4. Verwendung gemäß einem der vorangegangenen Ansprüche, **dadurch gekennzeichnet, dass** die Faserverbundwerkstoffstruktur einen Liner aufweist.

5. Verwendung gemäß Anspruch 4, **dadurch gekennzeichnet, dass** der Liner je nach Druckrichtung innen oder außen auf die rohrförmigen Faserverbundwerkstoffstruktur aufgebracht ist.

6. Verwendung gemäß Anspruch 4, **dadurch gekennzeichnet, dass** der Liner als Kern für die Wicklung der rohrförmigen Faserverbundwerkstoffstruktur dient.

7. Verwendung gemäß einer der vorangegangenen Ansprüche, **dadurch gekennzeichnet, dass** mehrere rohrförmige Faserverbundwerkstoffstrukturen über die Anschlusseinrichtungen (260) miteinander verbunden sind.

8. Verwendung gemäß einer der vorangegangenen Ansprüche, **dadurch gekennzeichnet, dass** mehrere rohrförmige Faserverbundwerkstoffstrukturen zu Untergruppen zusammengefasst miteinander verbunden sind.

## Claims

1. Use of a fiber composite material connecting portion (210) to connect a tubular fiber composite material structure to a connecting device (260), wherein the fiber composite material structure has more circumferential layers than longitudinal threads, wherein the connecting portion (210) has at least one fiber deflecting element (211, 212, 213) in its interior, wherein the course of the long fibers (201a, 202a, 203a) from the fiber composite component follows the shape of a fiber deflecting portion of a fiber deflecting element (211, 212, 213) so that the fiber direction thereof is deflected at the fiber deflecting portion, and wherein the long fibers (201a, 202a, 203a) do not completely loop around the fiber deflecting elements (211, 212, 213) with which they are associated respectively, wherein the fiber deflecting elements (211, 212, 213) consist of fiber composite material, and **characterized in that** no firm connection is present between the tubular fiber composite material structure and the connecting device (260), for a pressure tank (1).

2. Use according to claim 1, **characterized in that** the fiber composite material of the fiber deflecting elements (211, 212, 213) consists mainly of circumferential layers.

3. Use according to claim 1 or 2, **characterized in that** the connecting device (260) comprises a dome cap (2).

4. Use according to any one of the preceding claims, **characterized in that** the fiber composite material structure comprises a liner.

5. Use according to claim 4, **characterized in that** the liner, depending on the pressure direction, is applied to the tubular fiber composite material structure inside or outside.

6. Use according to claim 4, **characterized in that** the liner serves as a core for the winding of the tubular fiber composite material structure

7. Use according to any one of the preceding claims, **characterized in that** a plurality of tubular fiber composite material structures are interconnected via the connecting devices (260).

8. Use according to any one of the preceding claims, **characterized in that** a plurality of tubular fiber composite material structures are interconnected and combined in the form of sub-assemblies.

## Revendications

1. Utilisation d'une section de liaison en matériau composite à base de fibres (210) pour relier une structure tubulaire en matériau composite à base de fibres à un dispositif de raccordement (260), la structure en matériau composite à base de fibres comprenant plus de couches circonférentielles que de fils longitudinaux, la section de liaison (210) comprenant à l'intérieur au moins un élément de déviation de fibres (211, 212, 213), le parcours des fibres longues (201a, 202a, 203a) provenant de la pièce en matériau composite à base de fibres suivant la forme d'une section de déviation de fibres d'un élément de déviation de fibres (211, 212, 213), de sorte que leur direction des fibres est déviée au niveau de la section de déviation de fibres, et les fibres longues (201a, 202a, 203a) ne s'enroulant pas complètement autour des éléments de déviation de fibres (211, 212, 213) auxquels elles sont respectivement associées, les éléments de déviation de fibres (211, 212, 213) étant constitués d'un matériau composite à base de fibres, et **caractérisée en ce qu'**il n'existe aucune liaison fixe entre la structure tubulaire en matériau composite à base de fibres et le dispositif de raccordement (260), et **en ce que** l'utilisation est pour un réservoir sous pression (1).

2. Utilisation selon la revendication 1, **caractérisée en ce que** le matériau composite à base de fibres des éléments de déviation des fibres (211, 212, 213) est principalement constitué de couches circonférentielles.

3. Utilisation selon la revendication 1 ou 2, **caractérisée en ce que** le dispositif de raccordement (260) comprend un capuchon en dôme (2).

4. Utilisation selon l'une des revendications précédentes, **caractérisée en ce que** la structure en matériau composite à base de fibres comprend un liner.

5. Utilisation selon la revendication 4, **caractérisée en ce que** le liner est appliqué à l'intérieur ou à l'extérieur de la structure tubulaire en matériau composite à base de fibres, selon le sens de la pression.

6. Utilisation selon la revendication 4, **caractérisée en ce que** le liner sert de noyau pour l'enroulement de la structure tubulaire en matériau composite à base de fibres.

7. Utilisation selon l'une des revendications précédentes, **caractérisée en ce que** plusieurs structures tubulaires en matériau composite à base de fibres sont reliées entre elles par les dispositifs de raccordement (260).

8. Utilisation selon l'une des revendications précédentes, **caractérisée en ce que** plusieurs structures tubulaires en matériau composite à base de fibres sont reliées entre elles et regroupées en sous-groupes.
